# EUROPEAN PATENT APPLICATION

(11) **EP 1 350 902 A2**
(43) Date of publication of application: **08.10.2003**
(21) Application number: 03100865.9
(22) Date of filing: 02.04.2003
(51) Int. Cl.: E04D 13/08, E03B 3/02

(54) **Arrangement for collecting rainwater and a rainwater tank**

(30) Priority: 04.04.2002 FI 20020145 U
(71) Applicant: Hölttä, Eero, 50120 Mikkeli (FI)
(72) Inventor: Hölttä, Eero, 50120 Mikkeli (FI)
(74) Representative: Helke, Kimmo Kalervo

(57) **Abstract**

The invention relates to an arrangement for collecting rainwater and a rainwater tank (10). The rainwater is arranged to be gathered from a collection surface, using gutter elements fitted in connection with it, to which one or several pipe elements (11) are attached at their first ends (30.1), to conduct the water downwards and at the second end (30.2) of the pipe elements (11) one outlet connection (17) is arranged, for conducting the water out of the said pipe element (11) into a tank (10). The arrangement includes
- an intermediate connection (12) arranged between the first and second ends (30.1, 30.2) of the pipe elements (11), in connection with which shut-off control means (28, 32) are arranged, in such a way that, in their first position, the water is arranged to be led out from the pipe elements (11) through the said intermediate connection (12) and, in the second position, through an outlet connection (17) arranged in the second end (30.2) of the said pipe element (11) and
- at least one tank (10) arranged in connection with the said intermediate connection (12), for storing the rainwater.

## Description

The present invention relates to an arrangement for collecting rainwater, in which rainwater is arranged to be gathered from a collection surface, using gutter elements fitted in connection with it, to which one or several pipe elements are attached at their first ends, to lead the water downwards and in which one outlet connection is arranged at the second end of the pipe elements, for leading the water out of the said pipe element into a tank. The invention also relates to a rainwater tank.

The state of the art in rainwater treatment is represented nowadays by the practice, in which rainwater is collected by gravity from a collection surface, such as the roof of a building, into eaves gutters. To the eaves gutters have fitted down-pipe, by means of which the water is lead to the ground in a controlled manner. However, the outlet connection of the down-pipe is often quite close to structures and foundations. This may cause problems, as rainwater can enter the building's structures and damage them in many ways.

Instead of simply conducting the rainwater to the ground, a concrete guide channel, for example, may be arranged at the place of outlet connection of the down-pipe, which allows the water to be lead farther away from the foundations of the building. Further, various subsurface drain solutions are known, which are connected to a rainwater drain, arranged in connection with the outlet connection. However, especially in the case of old buildings, rainwater disposal is poorly arranged and the retro-fitting of disposal is difficult.

The use of various kinds of barrels cut open at the top, in connection with the outlet connections of down-pipes is also known. However, it is difficult to get the water out of these, especially when the barrel is only partly full.

Numerous patent publications relating to rainwater collection systems can be found. WO publication 98/22665 discloses a system, in which distribution devices of complex operation are used for distributing rainwater into storage tanks. In addition, the conducting of water into these tanks is arranged to take place by means of hoses.

EP publication 725188A1 discloses a solution further also based on the distribution of flow, in which the water collection tanks are arranged underground. From one of them, the water filters through the bottom into the ground and in the other it can be stored for use. The installation of this system is, however, difficult, as it requires earthmoving.

The present invention is intended to create an arrangement for the collection of rainwater, which does not demand major earthmoving operations and which can be easily arranged for existing rainwater devices. The characteristic features of the invention are stated in the accompanying Claim 1. In addition, the invention also relates to a rainwater tank, the characteristic features of which are stated in the accompanying Claim 7.

In the arrangement according to the invention, a simple intermediate connection is arranged between the ends of the pipe element that leads the rainwater downwards from the collection surface in a controlled manner, related to which connection at least one water collection tank can easily be located. Shut-off control means are arranged in the intermediate connection, which can easily be set in two different positions, for conducting the water alternatively to either the collection tank, or through an outlet connection in the lower part of the pipe element.

The rainwater tank according to the invention includes an emptying connection and pedestal devices. By means of these, the tank can be raised above ground level, which facilitates the emptying of the tank. The tank also includes a cover component, which can preferably be turned between a summer position and a winter position. Besides the cover preventing rubbish from entering the tank, it makes the tank safer, as it keeps children out of the tank.

Several significant advantages are gained by means of the arrangement according to the invention. In addition to the arrangement according to the invention being easy to install and protecting the structures from dampness, the rainwater stored in the collection tank can be used, for example, for watering garden plants or for washing a car. This achieves cost savings, for example, compared to taking water from the municipal water distribution network. In that case, the water would not only result in a water charge, but also a charge for waste-water treatment, which the watering of plants, for example, does not even be loaded. Further, the collection tank, which is preferably of recycled plastic, is light, allowing it to be easily moved, for example, for washing, or for undercover winter storage.

The other characteristic features of the arrangement and rainwater tank according to the invention will be apparent from the accompanying Claims and in connection with the embodiments described later. In the following, the invention is examined with reference to the accompanying drawings, in which
- Figure 1a: shows one embodiment of the arrangement according to the invention,
- Figure 1b: shows a top view of a example of a pedestal for the water collection tank,
- Figure 2: shows an example of the water collection tank,
- Figure 3a: shows a second example of the arrangement according to the invention, with two water collection tanks,
- Figure 3b: shows a top view of the pedestal of the embodiment shown in Figure 3a,

- Figure 4a: shows a top view of one example of the cover component of the water tank,
- Figure 4b: shows a side view of the example shown in Figure 4a,
- Figure 5a: shows a first example of the intermediate connection in the first position,
- Figure 5b: shows the first example of the intermediate connection in the second position,
- Figure 6: shows one example of the shut-off control of the intermediate connection,
- Figure 7: shows a second example of the intermediate connection, equipped with the shut-off control shown in Figure 6.

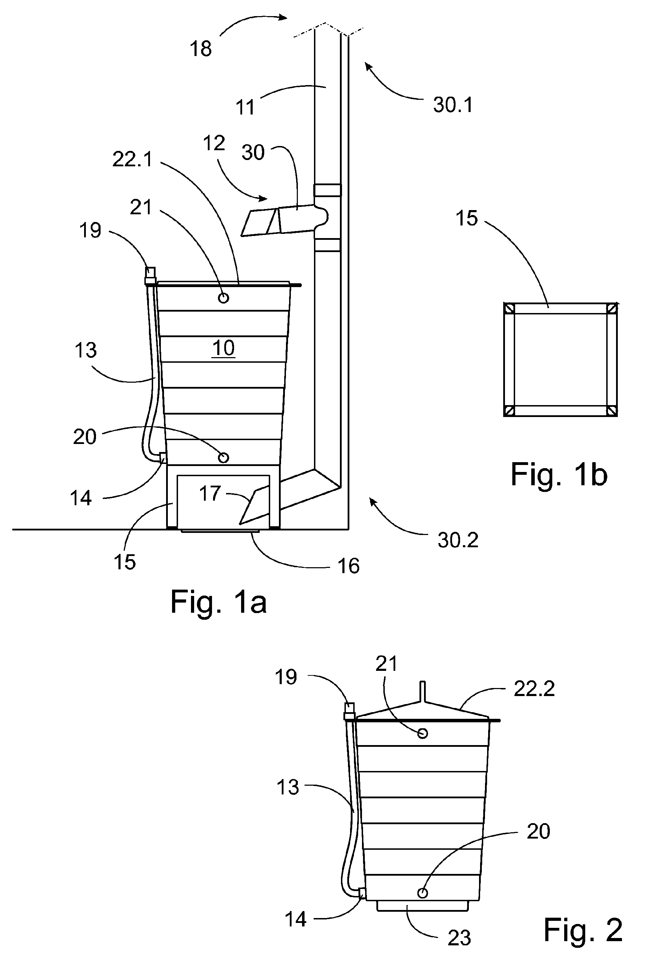

Figure 1a shows one example of an embodiment of the arrangement according to the invention. In this, an intermediate connection 12 is attached to a rainwater down-pipe 11, which is as such conventional, between its first end 30.1 and the outlet connection 17 at its second end 30.2. A guide pipe 30, the end of which opposite to the intermediate connection 12 points downwards at an angle, is fitted to the intermediate connection 12. The cross section of the down-pipe 11 can be, for example, circular or square. The installation height of the intermediate connection 12 relative to the ground is generally closer to the ground and thus also to the outlet connection 17 fitted to the second end of the down-pipe 11. The outlet connection 17 is arranged to conduct the water, for example, to a rainwater drain 16 or similar.

The water tank 10 is suitably arranged in relation to the intermediate connection 12 and its guide pipe 30, so that the water to be guided out of the down-pipe 11 through the intermediate connection 12 is arranged to drip from the end of the guide pipe 30 into the water tank 10. The water tank 10 is set on a pedestal 15 placed on the ground, so that it stands firmly.

Figure 1b shows a top view of an example of the pedestal 15 of the water tank 10 according to the invention. The material of the pedestal 15 is, for example, metal. According to one preferred embodiment, the position of the pedestal 15 can be adjusted, so that the length of its legs can be individually lengthened or shortened (not shown). This also allows the tank 10 to be installed on a difficult place on the ground. An example of such a situation is a building standing on a sloping site.

Figure 2 shows the water collection tank 10, in which the cover 22 is set to the winter position 22.2. The water tank 10 preferably includes one or several connections 20, 21 for leading water away from it. The connections 20, 21 can be in both the upper and lower parts of the tank 10. The connection 21 in the upper part can be utilized as an overflow connection, from which water can be lead when the tank is full, for example, through a hose attached to the connection, to a ditch (not shown). Further, a second tank 10.2 can also be connected to the upper connection 21, as described later. Unnecessary connections can be stopped, with, for example, plugs.

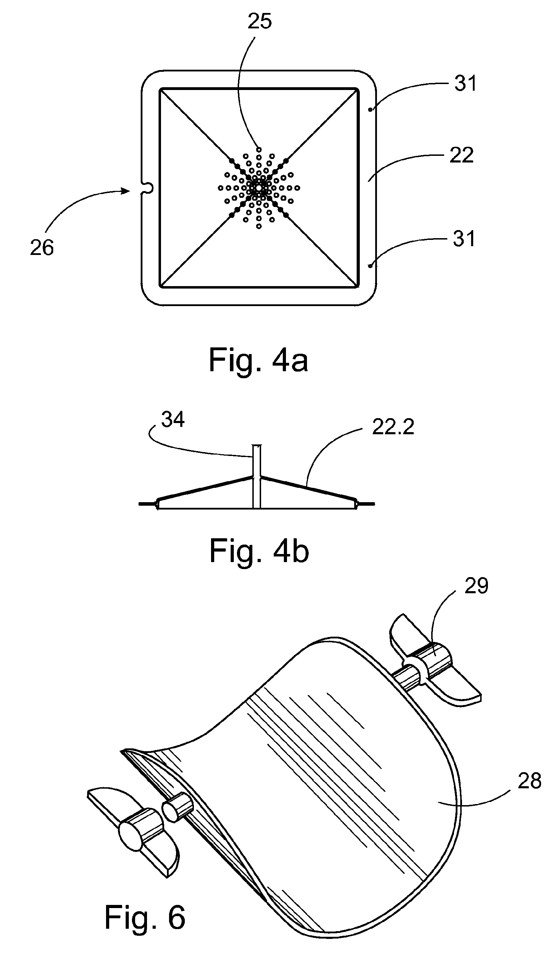

A flexible rubber or plastic hose 13, for example, is attached to the lower connection 20. The hose 13 is attached at its first end to the lower connection 20 of the water tank 10 using a standard connector 14. Shut-off devices 19, which are as such conventional, can be arranged in the second end of the hose 13, which will permit the water to be run cleanly, for example, to a watering can or similar. The second end of the hose 13 can be attached, for example, to a slot 26 (Figure 4a) arranged in the cover component 22, so that it will remain compactly attached to the tank 10 when it is not in use.

Figure 2 also shows the construction of the bottom of the tank 10. The bottom is shaped in such a way that it has a downward protrusion 23, for fitting the tank 10 firmly onto its pedestal 15. The water tank 10 shown in the example, the material of which can be, for example, recycled plastic with a painted surface, can be narrower in its lower part than in its upper part. In addition, the walls of the tank 10 are shaped with a stepped profile, which helps the plastic tank 10 to retain its shape. These also give the logistic advantage that the tanks 10 can then easily be stacked inside each other.

Arranging the water tank 10 on a pedestal 15 also achieves the important advantage that all of the water in a tank 10 that is now nearly empty can be easily run out, for example, into a watering can and thus used. Because the bottom of the tank 10 is at a distance from the actual ground level, on which the watering can or similar rests when being filled from the tank 10, the water can advantageously be run from the lower connection 20 of the tank 10 right down to the bottom level of the tank.

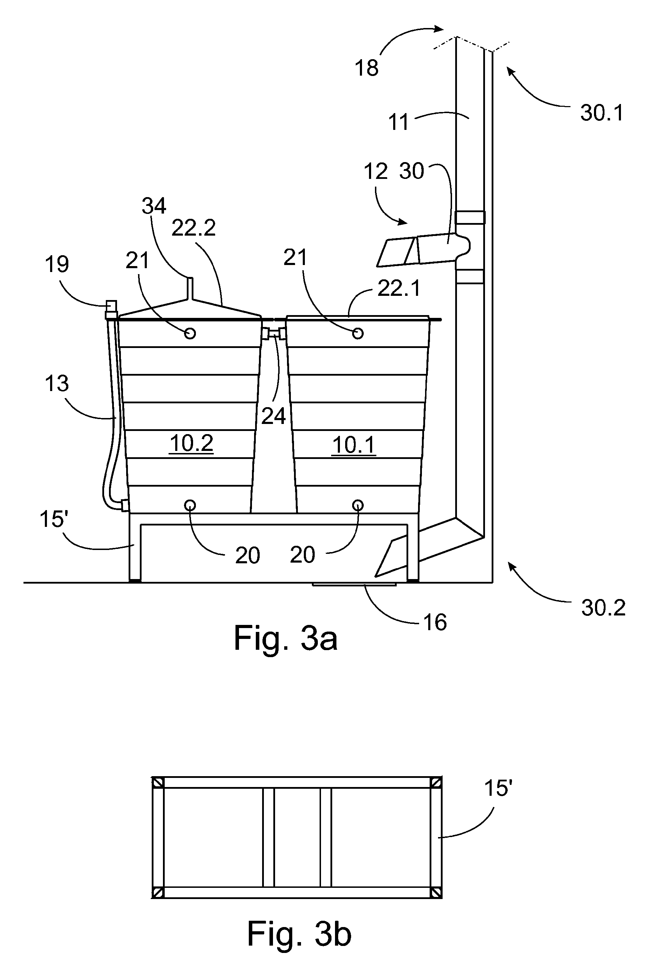

Figure 3a shows a second example of the arrangement according to the invention, in which two water tanks 10.1, 10.2 are used, while Figure 3b shows a top view of the pedestal structure 15' of the embodiment shown in Figure 3a. The tanks 10.1, 10.2 are connected to each other by means of a pipe 24 arranged in their upper connections 21. Once tank 10.1 is filled, the water thus moves to tank 10.2, through the pipe 24.

Figure 4a shows a top view of an example of the cover component 22 of the water tank 10, while Figure 4b shows a side view of it. The cover 22 is preferably shaped to be convex on one side and concave on the other. One example of such a solution is a ridge-roofed implementation, in which the cover 22 is shaped, for example, as a pyramid. When the cover 22 is on top of the tank 10 so that its concave side is downward, it is in the so-called summer position 22.1. When the cover 22 is turned upside down, i.e. so that its convex side is upward, the cover 22 is then in the winter position 22.2.

There are preferably perforation 25 in the cover 22, through which the water dripping through the intermediate connection 12 onto it will flow into the tank 10. In the winter position 22.2, the cover 22 with its convex side turned upward will not collect water, which thus cannot freeze onto it.

The cover 22 can also be hinged onto the tank 10 by hinges 31, in which case the cover can be half or completely opening. In the edge of the cover 22 there is also a slot 26 for supporting the hose 13 and also a vertical peg 34 protruding from the middle of both sides, from which the cover 22 can be easily gripped when turning it.

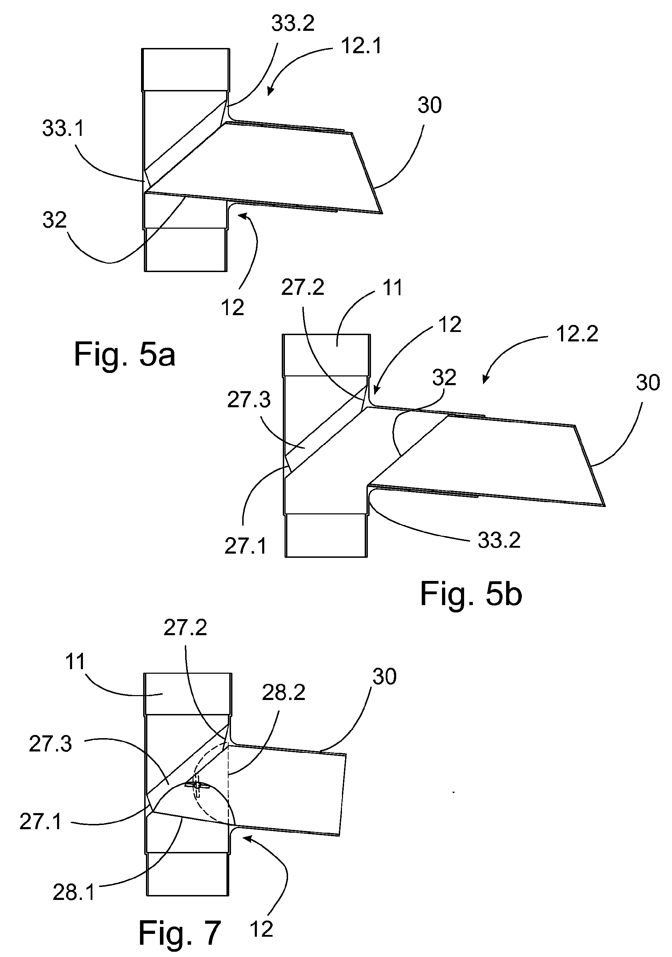

Figures 5a and 5b show a first example of the intermediate connection 12 used in the arrangement. At the intermediate connection 12, there are protrusions 27.1 - 27.3 fitted inside the down-pipe 11, which guide the water flow. In this embodiment, there is a guide pipe 30 arranged to be moved longitudinally within the intermediate connection 12, allowing it to also act as a shut-off control element 32.

Figure 5a shows the guide pipe 30 in its first position 12.1 pushed inside the down-pipe 11, so that the guide protrusions 27.1 - 27.3 guide the rainwater flowing from above smoothly into the guide pipe 30. The guide protrusions 27.1 - 27.3 also solve the surprising rubbish problem, which often appears in known down-pipes. The end 32 of the guide pipe 30 in the down-pipe 11 is cut at an angle, so that the lower part of it extends to the side 33.1 of the down-pipe 11 opposite to the intermediate connection 12 and the upper part is at the side 33.2 of the down-pipe 11 on the side with the intermediate connection 12. The guide pipe 30 continues to guide the water out through the intermediate connection 12 and runs it at its end into the tank 10.

Figure 5b shows the situation when the shut-off control element 32 formed from the guide pipe 30 is set into the second position 12.2, i.e. it shuts off the exit of the water through the intermediate connection 12. The guide pipe 30 is then pulled outside the down-pipe 11 so that the water flowing in the down-pipe 11 can flow through the down-pipe 11 to the outlet connection 17 in its lower part. In connection with the intermediate connection 12 retainer elements (not shown) are fitted, which prevent the guide pipe 30 from being pulled too far out of the intermediate connection 12. Pulling out is arranged in such a way that the lower end of the angled end 32 on the intermediate connection 12 side of the guide pipe 30 is at precisely the level of the down-pipe 11 side 32.2 of the intermediate connection 12.

Figure 6 shows a second example of the shut-off control element 28 fitted to the intermediate connection 12. The shut-off control element 28 is formed, for example, from a circular plastic piece, which is bent in such a way that it fits the shape of the shell of the circular cross-section down-pipe 11. The shut-off control element 28 includes turning buttons 29, by means of which its operating position can be changed.

Figure 7 shows a second example of the intermediate connection 12, equipped with the shut-off control element 28 shown in Figure 6. In the first position 28.1, in which the shut-off control element 28 is shown with a solid line, it guides the water flowing in the down-pipe 11 through the intermediate connection 12 to the guide pipe 30, from which the water then flows into the tank 10.

In the second position 28.2, in which the shut-off control element 28 is shown with a broken line, it is used to cover the opening of the intermediate connection 12, by lying against the shell of the down-pipe 11, the water then flowing straight through the down-pipe 11 to the outlet connection 17 arranged in its lower end 30.2.

On the basis of the above it is also obvious that the outlet connection 17 arranged in the second end of the pipe elements 11 can also be equipped operationally with an intermediate connection 12. The outlet connection 17 can then be in the pipe 11 at the height of the intermediate connection 12 in the manner described in the embodiments.

It should be understood that the above description and the related figures are only intended to illustrate the present invention. Thus, the invention is not restricted to only the embodiments disclosed above or defined in the Claims, but that many different variations and adaptations of the invention, which are possible within the scope of the inventive idea defined in the accompanying Claims, will be obvious to one versed in the art.

## Claims

1. An arrangement for collecting rainwater, in which the rainwater is arranged to be gathered from a collection surface, using gutter elements fitted in connection with it, to which one or several pipe elements (11) are attached at their first ends (30.1), to conduct the water downwards and at the second end (30.2) of the pipe elements (11) one outlet connection (17) is arranged, for conducting the water out of the said pipe element (11) into a tank (10), **characterized in that**, the arrangement includes
- an intermediate connection (12) arranged between the first and second ends (30.1, 30.2) of the pipe elements (11), in connection with which shut-off control means (28, 32) are arranged, in such a way that, in their first position, the water is arranged to be led out from the pipe elements (11) through the said intermediate connection (12) and, in the second position, through an outlet connection (17) arranged in the second end (30.2) of the said pipe element (11) and
- at least one tank (10) arranged in connection with the said intermediate connection (12), for storing the rainwater.

2. An arrangement according to Claim 1, **characterized in that** a cover component (22) is fitted to the said tank (10), which can be preferably turned between separate summer and winter positions (22.1, 22.2).

3. An arrangement according to Claim 1 or 2, **characterized in that** one or several connections (20, 21) are fitted to the tank (10), for removing water from it.

4. An arrangement according to any of Claims 1 - 3,
**characterized in that** guide protrusions (27.1 - 27.3) are fitted, in connection with the intermediate connection (12), to the pipe element (11), for guiding the water.

5. An arrangement according to any of Claims 1 - 4,
**characterized in that** the shut-off control element (28) is arranged, in its said second position, to connect with the shell component of the pipe element (11).

6. An arrangement according to any of Claims 1 - 4, **characterized in that** the shut-off control element (32) is formed from a guide pipe (30) arranged in the intermediate connection (12), which, in its first position, is arranged to extend inside the pipe element (11) and, in its second position, is arranged to be outside of the pipe element (11), permitting the water to flow to the outlet connection (17).

7. A rainwater tank (10), the upper part of which is connected to the pipe element (11) to lead water into it, **characterized in that** connections (20) are fitted to the tank (10), at least for leading water out of it, and that pedestal devices (15) can be fitted to it to permit its emptying.
